(19) Europäisches Patentamt / European Patent Office / Office européen des brevets

(11) **EP 4 528 307 A1**

(12) **DEMANDE DE BREVET EUROPEEN**

(43) Date de publication:
**26.03.2025  Bulletin 2025/13**

(21) Numéro de dépôt: **24200579.1**

(22) Date de dépôt: **16.09.2024**

(51) Classification Internationale des Brevets (IPC):
**G01S 3/74** *(2006.01)*       **H04B 7/22** *(2006.01)*

(52) Classification Coopérative des Brevets (CPC):
**G01S 3/74**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité:  **21.09.2023  FR 2310006**

(71) Demandeur: **THALES**
**92190 Meudon (FR)**

(72) Inventeurs:
• **DELMER, Alice**
**92622 GENNEVILLIERS Cedex (FR)**
• **FERREOL, Anne**
**92622 GENNEVILLIERS Cedex (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCÉDÉ DE DÉTERMINATION DE LA DIRECTION D'ARRIVÉE DES TRAJETS DE SIGNAUX IONOSPHÉRIQUES HF SUR UN RÉSEAU DE N CAPTEURS, PROGRAMME D'ORDINATEUR ET DISPOSITIF ASSOCIÉS**

(57)    L'invention concerne un procédé de détermination de la direction d'arrivée des trajets de signaux ionosphériques Hautes Fréquences sur un réseau (2) de N capteurs (3), comprenant:
- estimation, par goniométrie parcimonieuse, du vecteur $\tilde{\gamma}$ vérifiant

$$vec(\boldsymbol{R}_x) - \sigma^2 vec(\boldsymbol{I}_N) = \boldsymbol{C}\tilde{\boldsymbol{\gamma}}$$

où $\sigma^2$ est le niveau du bruit et $\mathbf{R_x}$ est la matrice de covariance vectorisée du signal x(t) considéré en sortie du réseau de capteurs, où

$$\mathbf{C} = \begin{bmatrix} \mathbf{U}(\theta_1) & \cdots & \mathbf{U}(\theta_Q) \end{bmatrix} \text{ avec } \begin{cases} \mathbf{U}(\theta) = \mathbf{A}^*(\theta) \otimes \mathbf{A}(\theta) \\ \mathbf{A}(\theta) = \begin{bmatrix} \mathbf{a}(\theta, \Delta_1) & \cdots & \mathbf{a}(\theta, \Delta_{Q'}) \end{bmatrix} \end{cases}$$

le vecteur $a(\theta, \Delta)$ de dimension $N \times 1$ est la réponse, connue, du réseau de capteurs à un signal reçu de direction d'arrivée $(\theta, \Delta)$,
- déduction, en fonction de l'indice $q_m$ de chaque composante non nulle $\tilde{\gamma}_q$ dudit $\tilde{\gamma}$ estimé, du gisement de trajets depuis un émetteur respectif m ;
- pour chaque gisement déduit, étant donné que $\tilde{\gamma}_{q_m} = vec(\mathbf{R}_m)$, les composantes non nulles de type $\mathbf{R}_m(q_p, q_p) = \gamma_{pp}{}^m$ de $\mathbf{R}_m$ sont ensuite déterminées : l'élévation d'indice $q_p$ associée à chacune de ces composantes non nulle , est sélectionnée comme égale à une élévation $\Delta_{mp}$ d'un trajet du $m^{\text{ième}}$ émetteur.

Processed by Luminess, 75001 PARIS (FR)

EP 4 528 307 A1

[Fig. 1]

**Description**

**Domaine technique :**

L'invention se situe dans le domaine de la goniométrie, qui est la détermination de la direction d'arrivée de signaux électromagnétiques (radio-électriques ou sonores). Elle concerne plus spécifiquement l'estimation de la direction d'arrivée de signaux incidents sur un réseau de plusieurs capteurs (quand les signaux sont radio-électriques par exemple, les capteurs sont des antennes) dont les caractéristiques sont connues. Les signaux incidents peuvent provenir d'un ou plusieurs émetteurs. Pour un même émetteur, le signal émis peut être reçu selon plusieurs trajets de propagation, donnant lieu à plusieurs signaux incidents sur le réseau de capteurs. L'invention vise à réaliser cette estimation y compris quand les signaux incidents ont la caractéristique d'être temporellement corrélés (ce qui peut être le cas lorsque les signaux sont des multi-trajets du même émetteur) et que les émetteurs, par exemple en grand nombre, génèrent au total un nombre de trajets potentiellement supérieur au nombre de capteurs du réseau de capteurs.

Les situations de multi-trajets donnant lieu à la présence de trajets corrélés sont rencontrées par exemple en milieu urbain dans les réseaux GSM (Global System for Mobile Communications) ou LTE (Long Term Evolution), du fait des réflexions sur des bâtiments, ou encore dans le cadre de communications ionosphériques HF (Hautes Fréquences). On s'intéresse plus spécifiquement à ces communications HF.

**Technique antérieure :**

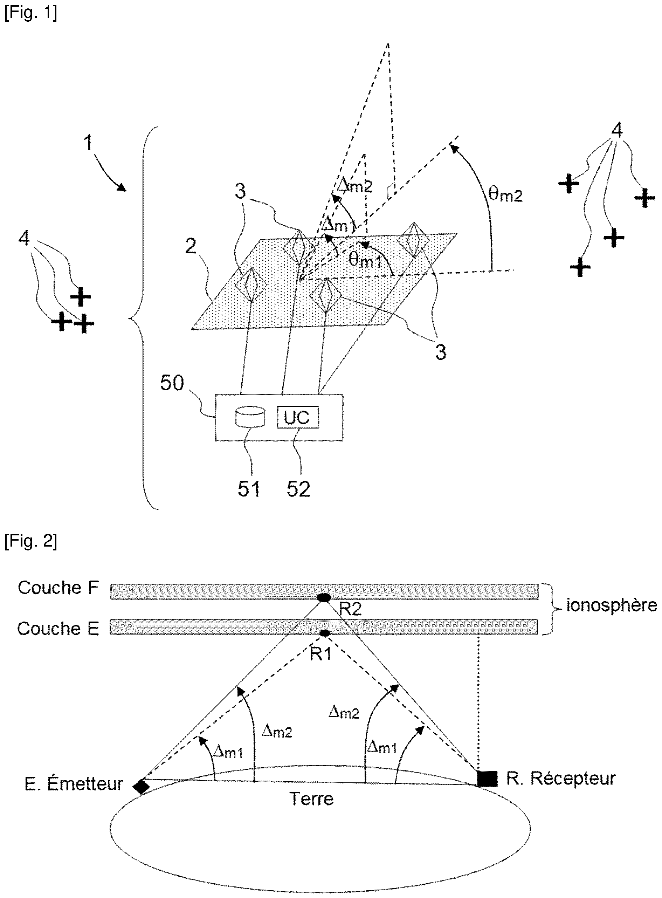

Pour les multi-trajets corrélés HF, les signaux de chacun des émetteurs se propagent suivant plusieurs trajets se réfléchissant sur les couches ionosphériques (en un point R1 sur la couche E et en un point R2 sur la couche F pour l'émetteur), comme illustré en figure 2 : les différents trajets d'un émetteur de position E arrivent généralement sur un récepteur **R** avec le même gisement $\theta_m$ et des angles d'élévations $\Delta_{mp}$ différents.

En figure 2, le nombre de trajets représentés entre l'émetteur E et le récepteur R est égal à 2 : p =1,2.

Des trajets arrivent au récepteur R avec des temps de propagation différents qui sont proportionnels à la distance parcourue. On aura ainsi des trajets corrélés lorsque la différence de temps de propagation entre deux trajets est inversement proportionnelle à la bande passante de l'émetteur. C'est ainsi que les trajets depuis un émetteur en HF sont souvent corrélés entre eux. D'autre part, les techniques de goniométrie classiques nécessitent de réaliser des intercepteurs avec des sous-bandes relativement faibles de manière à ce que le nombre de trajets incidents par sous-bande soit très inférieur au nombre d'antennes du réseau d'antennes.

Certaines techniques de goniométrie parcimonieuse 1D (i.e. estimation du gisement uniquement, en supposant l'élévation nulle) permettent d'estimer (ou « goniométrer ») l'incidence de potentiellement plus de trajets que d'antennes du réseau. Avec ces techniques, un intercepteur pourrait ainsi être mis en oeuvre avec largement moins de sous-bandes et donc avec des bandes instantanées de traitement beaucoup plus larges. Toutefois elles ne traitent pas le problème de la goniométrie 2D (avec estimation conjointe du gisement et de l'élévation) pour une géométrie de réseau quelconque et elles sont adaptées uniquement au cas de trajets décorrélés.

L'algorithme MUSIC, lui, permet d'estimer la direction d'arrivée de plusieurs trajets corrélés à condition qu'ils ne soient pas cohérents (trajets dont la différence de temps d'arrivée est quasiment nulle en étant très inférieur à l'inverse de la bande passante du signal) et qu'ils ne dépassent pas le nombre d'antennes du réseau. D'autre part, l'algorithme nécessite un temps d'observation du signal important pour bien estimer les directions des trajets corrélés. Cette durée d'observation nécessaire augmente avec le taux de corrélation des trajets.

Il existe donc un besoin d'une solution de détermination des incidences 2D dans les situations de canaux de propagation à multi-trajets corrélés, tels que rencontrés notamment dans les communications de type ionosphérique HF, avec un nombre de trajets incidents supérieur au nombre d'antennes du réseau d'antennes, et qui ne présentent pas les inconvénients de l'art antérieur.

**Résumé de l'invention :**

A cet effet, suivant un premier aspect, la présente invention décrit un procédé de détermination de la direction d'arrivée des trajets de signaux ionosphériques Hautes Fréquences sur un réseau de N capteurs, avec $N \geq 2$ et selon lequel ledit procédé est mis en oeuvre par un dispositif électronique de détermination de la direction d'arrivée des trajets et est caractérisé en ce qu'il comprend les étapes suivantes :

- i. estimation, par goniométrie parcimonieuse, du vecteur $\tilde{\gamma}$ vérifiant l'équation :

$$vec(\boldsymbol{R_x}) - \sigma^2 vec(\boldsymbol{I_N}) = \boldsymbol{C}\tilde{\boldsymbol{\gamma}}$$

où $\mathbf{I}_N$ est la matrice identité de taille NxN, $\sigma^2$ est le niveau du bruit et $\mathbf{R_x}$ est la matrice de covariance vectorisée du signal x(t) considéré en sortie du réseau de capteurs, avec, si $x_n(t)$ est le signal en sortie du $n^{ième}$ capteur :

$$\mathbf{x}(t) = \begin{bmatrix} x_1(t) \\ \vdots \\ x_N(t) \end{bmatrix} ;$$

$$\text{où } \mathbf{C} = \begin{bmatrix} \mathbf{U}(\theta_1) & \cdots & \mathbf{U}(\theta_Q) \end{bmatrix} \text{ avec } \begin{cases} \mathbf{U}(\theta) = \mathbf{A}^*(\theta) \otimes \mathbf{A}(\theta) \\ \mathbf{A}(\theta) = \begin{bmatrix} \mathbf{a}(\theta, \Delta_1) & \cdots & \mathbf{a}(\theta, \Delta_{Q'}) \end{bmatrix} \end{cases}$$

où le vecteur $\mathbf{a}(\theta, \Delta)$ de dimension $N$x1 est la réponse, connue, du réseau de capteurs à un signal reçu de direction d'arrivée $(\theta, \Delta)$, et

Q est le nombre de gisements potentiels considérés $\theta_q$ pour $1 \leq q \leq Q$ et Q' est le nombre d'élévations potentielles par gisement, $\Delta_{q'}$, pour $1 \leq q' \leq Q'$ dans l'espace discrétisé d'incidence du réseau de capteurs selon une grille 2D de gisements $\theta_q$ et d'élévations $\Delta_{q'}$, pour $1 \leq q' \leq Q'$ avec $0 \leq \theta_q < 360°$ et $0 \leq \Delta_q' < 90°$,

où

$$\tilde{\boldsymbol{\gamma}} = \begin{bmatrix} \tilde{\boldsymbol{\gamma}}_1 \\ \vdots \\ \tilde{\boldsymbol{\gamma}}_Q \end{bmatrix}$$

- ii. identification des composantes non nulles, parmi les composantes $\tilde{\gamma}_1$, ..., $\tilde{\gamma}_Q$ dudit $\tilde{\gamma}$ estimé, et déduction, en fonction de l'indice $q_m$ de chacune desdites composantes $\tilde{\gamma}_q$ non nulles, du gisement de trajets de signaux depuis un émetteur respectif m ;

- iii. pour chaque gisement déduit, étant donné que $\tilde{\gamma}_{q_m} = vec(\mathbf{R}_m)$, les composantes non nulles de type $\mathbf{R}_m (q_p, q_p) = \gamma_{pp}^m$ de $\mathbf{R}_m$ sont ensuite déterminées : l'élévation d'indice $q_p$ associée à chacune de ces composantes non nulle , est sélectionnée comme égale à une élévation $\Delta_{mp}$ d'un trajet du $m^{ième}$ émetteur.

L'invention permet ainsi de déterminer les incidences dans les situations de canaux de propagation ionosphériques HF à multi-trajets corrélés, et ceci avec un nombre de trajets incidents inférieur ou supérieur au nombre de capteurs (par exemples d'antennes) du réseau de capteurs, la solution nécessitant en outre un temps de calcul et une puissance de calcul réduits.

La solution proposée permet d'exploiter les avantages du modèle de la matrice de covariance vectorisée en présence de trajets corrélés qui permettent de :

- potentiellement traiter plus de trajets que d'antennes du réseau de goniométrie

- travailler avec des réseaux de goniométrie ayant un nombre d'antennes plus faible ; et

- ne nécessite pas la détection du nombre de trajets.

La solution proposée permet en outre de déterminer les directions d'arrivées de trajets provenant d'émetteurs non « maîtrisés », i.e. dont on ne connaît pas, ou au mieux de façon imparfaite, la norme du signal émis.

Dans des modes de réalisation, un tel procédé comprendra en outre l'une au moins des caractéristiques suivantes :

- l'estimation de la direction d'arrivée comprend l'estimation d'un angle d'élévation et d'un angle de gisement ;

- le procédé comprend au moins une des dispositions suivantes :

  le nombre de trajets est supérieur au nombre N de capteurs ;

des trajets sont corrélés temporellement entre eux.

Suivant un autre aspect, l'invention décrit un programme d'ordinateur destiné à être stocké dans la mémoire d'un bloc électronique de traitement et comprenant en outre un microcalculateur, ledit programme d'ordinateur comprenant des instructions qui, lorsqu'elles sont exécutées sur le microcalculateur, mettent en oeuvre les étapes i, ii, iii et iv d'un procédé de détermination de la direction d'arrivée des trajets de signaux sur un réseau de N capteurs suivant le premier aspect de l'invention.

L'invention décrit également un support non transitoire lisible par ordinateur stockant un tel programme informatique.

Suivant un autre aspect, l'invention décrit un dispositif de détermination de la direction d'arrivée des trajets de signaux ionosphériques Hautes Fréquences sur un réseau de N capteurs, avec $N \geq 2$, ledit dispositif électronique de détermination de la direction d'arrivée des trajets étant adapté pour estimer par goniométrie parcimonieuse, le vecteur $\tilde{\gamma}$ vérifiant l'équation :

$$vec(\boldsymbol{R}_x) - \sigma^2 vec(\boldsymbol{I}_N) = \boldsymbol{C}\tilde{\boldsymbol{\gamma}}$$

où $\boldsymbol{I}_N$ est la matrice identité de taille NxN, $\sigma^2$ est le niveau du bruit et $\boldsymbol{R_x}$ est la matrice de covariance vectorisée du signal $\mathbf{x}(t)$ considéré en sortie du réseau de capteurs, avec, si $x_n(t)$ est le signal en sortie du $n^{ième}$ capteur :

$$\mathbf{x}(t) = \begin{bmatrix} x_1(t) \\ \vdots \\ x_N(t) \end{bmatrix};$$

$$\text{où } \mathbf{C} = \begin{bmatrix} \mathbf{U}(\theta_1) & \cdots & \mathbf{U}(\theta_Q) \end{bmatrix} \text{ avec } \begin{cases} \mathbf{U}(\theta) = \mathbf{A}^*(\theta) \otimes \mathbf{A}(\theta) \\ \mathbf{A}(\theta) = \begin{bmatrix} \mathbf{a}(\theta, \Delta_1) & \cdots & \mathbf{a}(\theta, \Delta_{Q'}) \end{bmatrix} \end{cases}$$

où le vecteur $\boldsymbol{a}(\theta, \Delta)$ de dimension $N$x1 est la réponse, connue, du réseau de capteurs à un signal reçu de direction d'arrivée $(\theta, \Delta)$, et

Q est le nombre de gisements potentiels considérés $\theta_q$ pour $1 \leq q \leq Q$ et Q' est le nombre d'élévations potentielles par gisement, $\Delta_{q'}$, pour $1 \leq q' \leq Q'$ dans l'espace discrétisé d'incidence du réseau de capteurs selon une grille 2D de gisements $\theta_q$ et d'élévations $\Delta_{q'}$, pour $1 \leq q' \leq Q'$ avec $0 \leq \theta_q < 360°$ et $0 \leq \Delta_{q'} < 90°$, où

$$\tilde{\boldsymbol{\gamma}} = \begin{bmatrix} \tilde{\boldsymbol{\gamma}}_1 \\ \vdots \\ \tilde{\boldsymbol{\gamma}}_Q \end{bmatrix} \quad ;$$

ledit dispositif étant en outre adapté pour identifier les composantes non nulles, parmi les composantes $\tilde{\gamma}_1, ..., \tilde{\gamma}_Q$ dudit $\tilde{\gamma}$ estimé, et pour déduire, en fonction de l'indice $q_m$ de chacune desdites composantes $\tilde{\gamma}_q$ non nulles, le gisement de trajets de signaux depuis un émetteur respectif m ;

ledit dispositif étant en outre adapté, pour chaque gisement déduit, étant donné que $\tilde{\gamma}_{qm} = vec(\boldsymbol{R}_m)$, pour déterminer les composantes non nulles de type $\boldsymbol{R}_m(q_p, q_p) = \gamma_{pp}{}^m$ de $\boldsymbol{R}_m$ et sélectionner l'élévation d'indice $q_p$ associée à chacune de ces composantes non nulle, comme égale à une élévation $\Delta_{mp}$ d'un trajet du $m^{ième}$ émetteur.

Dans des modes de réalisation, un tel dispositif comprendra en outre l'une au moins des caractéristiques suivantes :

- l'estimation de la direction d'arrivée comprend l'estimation d'un angle d'élévation et d'un angle de gisement ;

- le procédé comprend au moins une des dispositions suivantes :

le nombre de trajets est supérieur au nombre N de capteurs ;

des trajets sont corrélés temporellement entre eux.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 représente schématiquement un système de goniométrie 1 dans un mode de réalisation de l'invention ;

[Fig. 2] La figure 2 illustre un exemple de canal de propagation multi-trajet en HF;

[Fig. 3] La figure 3 illustre un des modèles utilisés dans un procédé de goniométrie dans un mode de réalisation de l'invention ;

[Fig. 4] La figure 4 représente des étapes d'un procédé de goniométrie dans un mode de réalisation de l'invention.

Des références identiques peuvent être utilisées dans des figures différentes lorsqu'elles désignent des éléments identiques ou comparables.

**Description détaillée :**

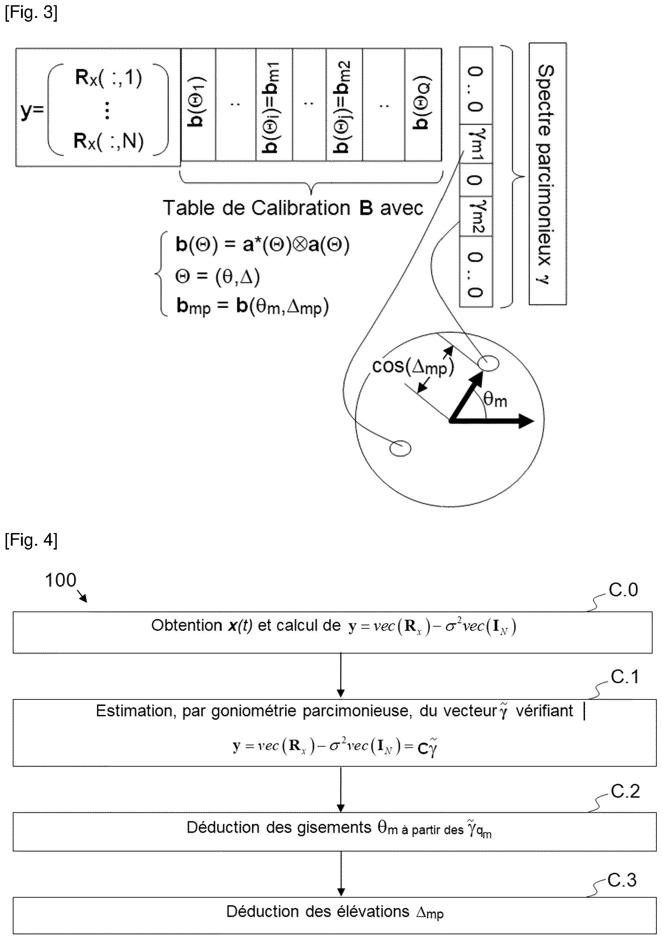

La figure 1 représente schématiquement un système de goniométrie 1 dans un mode de réalisation de l'invention, comportant un réseau de goniométrie 2 et un bloc électronique de traitement 50.
Le réseau de goniométrie 2 est un réseau de capteurs de signaux électromagnétiques, typiquement des signaux radiofréquences (RF) ou sonores. Dans l'exemple considéré ici, les signaux sont radiofréquences et le réseau de goniométrie 2 est un réseau d'antennes qui comporte N antennes de réception 3 (N≥2 pour un fonctionnement en 1 dimension (1D) et N≥3 pour un fonctionnement en 2 dimensions (2D)) disposées sur un support, ici au sol. Chaque antenne 3 est adaptée pour recevoir des signaux radiofréquences incidents (les trajets) en la position de l'antenne et les convertir en signaux électriques représentatifs des signaux incidents reçus. Les dispositions relatives des antennes 3 dépendent du type de signaux RF. Chaque signal RF incident est un signal dont la source d'émission est un émetteur radiofréquence 4 (par exemple un téléphone mobile).
Le bloc de traitement 50 est adapté pour recevoir les signaux électriques en provenance des différentes antennes 3 du réseau d'antennes 2, pour effectuer des traitements du signal sur ces signaux et pour déterminer les directions d'arrivée, encore appelées « incidences »), définie par le gisement et l'élévation du trajet, de chacun des trajets reçus par les antennes 3, en mettant en oeuvre les étapes décrites plus bas en référence à la figure 4.
Le gisement $\theta_{mp}$ correspond à l'angle de la direction d'arrivée projetée dans le plan horizontal (le plan horizontal est le plan tangent à la surface de la Terre en la localisation du réseau d'antennes) par rapport à un axe de référence du réseau de capteurs. L'élévation $\Delta_{mp}$ correspond à l'angle formé entre le plan horizontal et la direction d'arrivée. L'élévation peut également être appelée angle de site.
Dans un mode de réalisation, le bloc de traitement 50 comporte une mémoire 51 et un microprocesseur 52, et la mémoire 51 compte des instructions logicielles qui lorsqu'exécutées par le microprocesseur 52, mettent en oeuvre les étapes incombant au bloc de traitement 50 et décrites plus bas en référence à la figure 4.
Les trajets reçus proviennent d'un ensemble de $M$ émetteurs 4. Le nombre M est a priori non connu, comme le nombre de multi-trajets reçus en provenance d'un même émetteur.
On considère que l'on est en présence a priori de trajets temporellement corrélés entre eux.

**Modélisation du signal reçu sur le réseau de goniométrie et déduction de la structure de la matrice de covariance vectorisée :**

En présence de $M$ émetteurs ayant chacun $P_m$ trajets, m = 1 à M, le signal en sortie du réseau 2 des $N$ antennes 3 du réseau de goniométrie 1 s'écrit de la façon suivante :

$$\mathbf{x}(t) = \begin{bmatrix} x_1(t) \\ \vdots \\ x_N(t) \end{bmatrix} = \sum_{m=1}^{M} \sum_{p=1}^{P_m} \rho_{mp} \mathbf{a}(\Theta_{mp}) \mathrm{s}_m(t - \tau_{mp}) + \mathbf{n}(t) \quad \textit{(équation 1)}$$

où $x_n(t)$ est le signal en sortie de la $n^{ième}$ antenne, $s_m(t)$ le signal du $m^{ième}$ émetteur **4** et $\mathbf{n}$(t) le vecteur bruit. Les signaux de chacun des émetteurs 4 sont supposés décorrélés (i.e. les signaux d'un quelconque des émetteurs 4 sont supposés décorrélés des signaux d'un quelconque autre des émetteurs 4).

Le vecteur $\mathbf{a}(\Theta)$, de dimension $N$x1, caractérise la relation entre le signal mesuré par le réseau d'antennes $\mathbf{x}$(t) et le signal incident unitaire $s(t\text{-}\tau)$ de direction d'arrivée $\Theta$. On l'appelle *réponse* du réseau de goniométrie 2 à un signal reçu d'incidence $\Theta$, où $\Theta = (\theta, \Delta)$, $\theta$ étant le gisement et $\Delta$ l'élévation. Cette réponse est connue ; elle a par exemple été déterminée dans une phase préalable, soit par calcul, soit par calibration expérimentale, pour une valeur de $\Theta$ continue quelconque ou alors pour un ensemble prédéterminé de valeurs d'incidence. Par exemple, pour un réseau où la réponse

$$\mathbf{a}(\Theta) = \begin{bmatrix} a_1(\Theta) \\ \vdots \\ a_N(\Theta) \end{bmatrix}$$

ne dépend que de la position des capteurs, le vecteur $\mathbf{a}(\Theta)$ établi par calcul s'écrit : avec

$$a_n(\Theta) = \exp(-j\,\frac{2\,\pi}{\lambda}\,\mathbf{k}^T(\Theta)\boldsymbol{D_n})$$, où $\mathbf{k}(\Theta)$ est le vecteur de direction d'onde et $\boldsymbol{D_n}$ la position du $n^{ième}$ capteur.

Le $p^{ième}$ trajet du $m^{ième}$ émetteur 4 est caractérisé par son incidence $\Theta_{mp} = (\theta_{mp}, \Delta_{mp})$, son retard de propagation $\tau_{mp}$ et son amplitude $\rho_{mp}$ (dans le cas particulier HF, on rappelle que le gisement des différents trajets de l'émetteur est le même pour les différents trajets).

Le signal radioélectrique $s_m(t)$ d'amplitude complexe, de bande $B_m$ et de fréquence centrale $f_m$ s'exprime par exemple sous la forme :

$$s_m(t) = \alpha_m(t)\, e^{j2\pi f_m t}$$

Le taux de corrélation entre deux trajets (d'indices $p, q$) du $m^{ième}$ émetteur 4 peut s'approximer par :

$$\gamma_{pq}{}^m = E\left[\left(\rho_{mp}\mathrm{s}_m(t-\tau_{mp})\right)\left(\rho_{mq}\mathrm{s}_m(t-\tau_{mq})\right)^*\right] \approx \rho_{mp}\rho_{mq}{}^* \frac{\sin\left(\pi B_m\left(\tau_{mq}-\tau_{mp}\right)\right)}{\pi B_m\left(\tau_{mq}-\tau_{mp}\right)}$$

*(équation 2)*

où $B_m$ est la bande passante de cet émetteur, $E$[ ] est l'espérance mathématique et * désigne le conjugué.

Ainsi, on considère que deux trajets, d'indices p, q, du $m^{ième}$ émetteur 4 sont corrélés si :

$$\left|\tau_{mq}-\tau_{mp}\right| \leq \frac{1}{B_m} \qquad \textit{(équation 3)}$$

Dans le cas particulier, auquel on s'intéresse plus particulièrement ici, des signaux ionosophériques HF, où la bande passante est souvent de l'ordre de 3kHz, les trajets sont alors corrélés lorsque la différence de temps d'arrivée est inférieure à 0.33ms. On remarque par ailleurs que $y_{pp}{}^m$ est la puissance du $p^{ième}$ trajet tel que $\gamma_{pp}{}^m = \left|\rho_{mp}\right|^2$ .

Le modèle de l'équation (1) peut se réécrire de la manière suivante

$$\mathbf{x}(t) = \sum_{m=1}^{M} \mathbf{A}_m \mathbf{S}_m(t) + \mathbf{n}(t) \quad \text{avec} \begin{cases} \mathbf{A}_m = \begin{bmatrix} \mathbf{a}(\Theta_{m1}) & \cdots & \mathbf{a}(\Theta_{mP_m}) \end{bmatrix} \\ \mathbf{S}_m(t) = \begin{bmatrix} \rho_{m1} \times \mathrm{s}_m(t - \tau_{m1}) \\ \vdots \\ \rho_{mP_m} \times \mathrm{s}_m(t - \tau_{mP_m}) \end{bmatrix} \end{cases}$$

*(équation 4)*

En supposant que le bruit soit décorrélé des signaux des émetteurs 4 et qu'il soit blanc spatialement avec $E[\mathbf{n}(t)\mathbf{n}^H(t)] = \sigma^2 \mathbf{I}_N$ où $\mathbf{I}_N$ matrice identité de taille NxN et $H$ définit l'opérateur de transposé et conjugué ($\sigma^2$ est donc le niveau du bruit), la matrice de covariance des signaux reçus s'écrit alors :

$$\mathbf{R}_x = E\left[\mathbf{x}(t)\mathbf{x}^H(t)\right] = \sum_{m=1}^{M} \mathbf{A}_m \mathbf{R}_{Sm} \mathbf{A}_m^H + \sigma^2 \mathbf{I}_N$$

*(équation 5)*

$$\text{avec } \mathbf{R}_{Sm} = E\left[\mathbf{S}_m(t)\mathbf{S}_m^H(t)\right] = \begin{bmatrix} \gamma_{11}^m & \gamma_{12}^m & \cdots \\ \gamma_{21}^m & \gamma_{22}^m & \\ \vdots & & \ddots \end{bmatrix}$$

En pratique la matrice de covariance est estimée à partir de K échantillons temporels de la manière suivante :

$$\hat{\mathbf{R}}_x = \frac{1}{K} \sum_{k=1}^{K} \mathbf{x}(t_k)\mathbf{x}^H(t_k) \qquad \text{(équation 6)}$$

Dans ce qui suit, la matrice de covariance vectorisée est utilisée :

$$vec(\mathbf{R}_x) = \begin{bmatrix} \mathbf{R}_x(:,1) \\ \vdots \\ \mathbf{R}_x(:,N) \end{bmatrix} \text{ avec } \mathbf{R}_x(:,n) = \begin{bmatrix} \mathbf{R}_x(1,n) \\ \vdots \\ \mathbf{R}_x(N,n) \end{bmatrix}$$

*(équation 7)*

D'après les équations (4)(5) on peut montrer que :

$$vec(\mathbf{R}_x) = \sum_{m=1}^{M} \sum_{p,q=1}^{P_m} \gamma_{pq}^m \mathbf{a}^*(\Theta_{mq}) \otimes \mathbf{a}(\Theta_{mp}) + \sigma^2 vec(\mathbf{I}_N) \quad \text{(équation 8)}$$

où $\otimes$ désigne le produit de Kronecker. Cette dernière expression peut se réécrire de manière suivante :

$$vec(\mathbf{R}_x) = \sum_{m=1}^{M} \sum_{p=1}^{P_m} \gamma_{pp}^m \mathbf{b}(\Theta_{mp}) + \mathbf{e} + \sigma^2 vec(\mathbf{I}_N)$$

*(équation 9)*

$$\text{avec } \begin{cases} \mathbf{e} = \sum_{m=1}^{M} \sum_{i \neq j} \gamma_{ij}^m \mathbf{a}^*(\Theta_{mj}) \otimes \mathbf{a}(\Theta_{mi}) \\ \mathbf{b}(\Theta) = \mathbf{a}^*(\Theta) \otimes \mathbf{a}(\Theta) \end{cases}$$

où l'amplitude du vecteur **e** dépend du niveau de corrélation entre les trajets.

Il est ici rappelé que la vectorisation d'une matrice, par exemple la matrice R, nommée vec(R,) est un vecteur dans lequel les colonnes de ladite matrice sont disposées les unes en dessous des autres.

D'après l'équation 9 et pour l'exemple de **a(Θ)** donné précédemment, on en déduit que dans cette configuration, **b(Θ)** est un vecteur de dimension $N^2$ dont la (n') ème composante s'exprime $\mathrm{b}_{n'}(\mathbf{\Theta}) = \exp(-j\,\frac{2\pi}{\lambda}\,\mathbf{k}^{\mathrm{T}}(\mathbf{\Theta})\boldsymbol{D}_{n'})$

avec $\boldsymbol{D}_{n'} = \boldsymbol{D}_n - \boldsymbol{D}_{k+1}$, où $n = n'\bmod N$ et $k = \lfloor n'/N \rfloor$. Le vecteur **b(Θ)** correspond donc à la réponse d'un réseau virtuel où les antennes seraient positionnées aux positions $\boldsymbol{D}_{n'}$.

On considère un échantillonnage de l'espace d'incidence du réseau d'antennes selon une grille 2D de gisements $\theta_q$ et d'élévations $\Delta_q$ contenant $Q_{tot}$ incidences potentielles notées $\Theta_q$ pour $1 \le q \le Q_{tot}$, avec $0 \le \theta_q < 360°$ et $0 \le \Delta_q < 90°$.

Par exemple, on pourra prendre un pas de grille fixe de 4° selon chacun des angles ; $Q_{tot}$ est alors égal à 90x22.

On note alors **B** la table de calibration suivante :

$$\mathbf{B} = \left[\, \mathbf{b}(\mathbf{\Theta}_1) \;\cdots\; \mathbf{b}\big(\mathbf{\Theta}_{Q_{tot}}\big) \,\right] \quad \textit{(équation 10)}$$

En première approximation, on suppose que pour chaque incidence $\Theta_{mp}$ de trajet reçu par le réseau d'antennes, il existe un indice q compris entre 1 et $Q_{tot}$ tel que $\Theta_{mp} = \Theta_q$ ; ce sont ces incidences-là, parmi les $Q_{tot}$ incidences possibles, qu'il va s'agir d'identifier. On notera ces indices $q_{mp}$ dans les équations 10 et 11 :

$$\mathbf{\Theta}_{mp} = \mathbf{\Theta}_{q_{mp}} \text{ pour } \begin{cases} 1 \le m \le M \\ 1 \le p \le P_m \end{cases}$$

Dans la pratique, $\Theta_{q_{mp}}$ sera l'incidence la plus proche de $\Theta_{mp}$ dans la grille des $Q_{tot}$ incidences possibles.

On en déduit que

$$vec\left(\mathbf{R}_x\right) = \mathbf{B}\boldsymbol{\gamma} + \mathbf{e} + \sigma^2 vec\left(\mathbf{I}_N\right) \quad \text{avec} \quad \begin{cases} \gamma\left(q_{mp}\right) = \gamma_{pp}{}^m \text{ pour } \begin{cases} 1 \le m \le M \\ 1 \le p \le P_m \end{cases} \\ \gamma\left(q\right) = 0 \text{ sinon} \end{cases}$$

*(équation 11)*

On obtient un modèle parcimonieux de la matrice de covariance vectorisée perturbé par un bruit $\mathbf{e} + \sigma^2 vec(\mathbf{I}_N)$ dépendant des niveaux $\gamma_{ij}{}^m$ de corrélation entre les trajets de chacun des émetteurs 4 ainsi que du niveau $\sigma^2$ du bruit.

La matrice de covariance vectorisée $vec(\mathbf{R}_x)$ pourrait s'écrire de la manière suivante :

$$vec(\mathbf{R}_x) = \sum_{m=1}^{M}(\mathbf{A}_m^* \otimes \mathbf{A}_m)\,\boldsymbol{\gamma}_m + \sigma^2 vec(\mathbf{I}_N) \text{ avec } \boldsymbol{\gamma}_m = vec\left(\mathbf{R}_{S_m}\right)$$

*(équation 12)*

En prenant en compte la caractéristique particulière des incidences des multi-trajets de signaux ionosphériques HF où $\Theta_{mp} = \{\theta_m, \Delta_{mp}\}$, on définit la table de calibration suivante :

$$\mathbf{C} = \left[\, \mathbf{U}\big(\theta_1\big) \;\cdots\; \mathbf{U}\big(\theta_Q\big) \,\right] \text{ avec } \begin{cases} \mathbf{U}\left(\theta\right) = \mathbf{A}^*\left(\theta\right) \otimes \mathbf{A}\left(\theta\right) \\ \mathbf{A}\left(\theta\right) = \left[\, \mathbf{a}\big(\theta, \Delta_1\big) \;\cdots\; \mathbf{a}\big(\theta, \Delta_{Q'}\big) \,\right] \end{cases}$$

*(équation 13)*

avec Q le nombre de gisements potentiels considérés et Q' le nombre d'élévations potentielles par gisement, dans l'espace discrétisé d'incidence du réseau d'antennes selon une grille 2D de gisements $\theta_q$ et d'élévations $\Delta_{q'}$ pour $1 \leq q \leq Q$, pour $1 \leq q' \leq Q'$ avec $0 \leq \theta_q < 360°$ et $0 \leq \Delta_{q'}' < 90°$ et on en déduit le deuxième modèle parcimonieux suivant :

$$vec(\mathbf{R}_x) = \mathbf{C} \times \tilde{\boldsymbol{\gamma}} + \sigma^2\, vec(\mathbf{I}_N) \ \text{ avec } \tilde{\boldsymbol{\gamma}} = \begin{bmatrix} \tilde{\boldsymbol{\gamma}}_1 \\ \vdots \\ \tilde{\boldsymbol{\gamma}}_Q \end{bmatrix} \quad \text{(équation 14)}$$

où chaque vecteur $\tilde{\gamma}_q$ de taille $(Q' \times Q')$ représente, relativement au gisement de trajets $\theta_q$ qui lui est associé, la vectorisation de la matrice de covariance des potentiels trajets et

où $\tilde{\gamma}_q$ contient des composantes non nulles seulement quand l'indice q correspond à un gisement de trajets correspondant à un émetteur d'indice m dont proviennent des signaux reçus par le réseau de capteurs ; dans ce cas q est noté $q_m$ :

$$\begin{cases} \tilde{\gamma}_{q_m} = vec\big(\mathbf{R}_m\big) \\ \tilde{\gamma}_q = \mathbf{0} \ \text{sinon} \end{cases}$$

où les matrices $\mathbf{R}_m$ sont de dimension Q'xQ' et

où la composante $\mathbf{R}_m(i,j)$ de $\mathbf{R}_m$, est non nulle seulement lorsqu'il existe soit un trajet $k$ si $i = j$, soit deux trajets (le trajet $k$ et le trajet $l$ de l'émetteur $m$) sinon, depuis ledit émetteur d'indice m, d'élévations associées aux indices i, j ; dans ce cas i (indice d'élévation relative au trajet $k$) et j (indice d'élévation relative au trajet $l$) sont notés respectivement $q_k'$ et $q_l'$, et

$$\begin{cases} \mathbf{R}_m(q_k', q_l') = \gamma_{kl}^m \\ \mathbf{R}_m(i, j) = 0 \ \text{ sinon} \end{cases}$$

(dans le cas d'un seul trajet k, l est pris égal à k dans la précédente formule.

En considérant le modèle de l'équation 0,

- le vecteur $vec(\mathbf{R}_x)$ est composé au maximum de $N^2 - N+1$ composantes indépendantes avec un réseau de N antennes ;
- la matrice $\mathbf{A}_m^* \otimes \mathbf{A}_m$ est composée de $(P_m)^2$ colonnes car $\mathbf{A}_m$ est de dimension $NxP_m$. Le nombre de composantes non nulles contenu dans les vecteurs $\{\gamma_1,..., \gamma_M\}$ vaut alors $\sum_{m=1}^{M}\big(P_m\big)^2$.

On en déduit alors que la condition d'identifiabilité des trajets est la suivante :

$$\sum_{m=1}^{M}\big(P_m\big)^2 < N^2 - N \quad \text{(équation 15)}$$

En supposant que le nombre de trajets par émetteur vérifie $P_m \leq P$, la capacité en nombre d'émetteurs devient alors :

$$M < \frac{N^2 - N}{P^2} \quad \text{(équation 16)}$$

En HF, $P$ est typiquement de l'ordre de 2 et le nombre d'antennes peut atteindre $N=10$. On a dans ce cas une capacité en nombre d'émetteurs vérifiant $M<23$.

**Principe de la goniométrie parcimonieuse**

Le domaine de l'estimation parcimonieuse à partir d'un modèle d'observation regroupe les principes mathématiques permettant de résoudre un système d'équations ayant plus d'inconnues que d'équations sachant que la plupart des inconnues sont nulles.

L'objectif de la goniométrie parcimonieuse, dans une configuration de trajets non corrélés, est de résoudre le système d'équations $\mathbf{y} = vec(\mathbf{R}_x) - \sigma^2 vec(\mathbf{I}_N) = \mathbf{B}\gamma$ pour estimer le vecteur parcimonieux $\gamma$. Selon les équations (10)(11), les incidences des trajets reçus correspondant au vecteur $\mathbf{x}(t)$ (tel que considéré, donc, aux K instants d'échantillonnages $t_1$ à $t_K$ utilisés pour approximer la matrice de covariance) correspondent alors aux composantes non nulles du vecteur $\gamma$ où $\gamma$ $(q_{mp}) = \gamma_{pp}{}^m$, et donc on peut en déduire que l'incidence correspondant à la $q_{mp}{}^{ème}$ composante de $\mathbf{B}$ est une incidence d'un trajet reçu à l'instant t, soit $\Theta_{qmp} = \Theta_{mp}$. Cela est illustré sur la figure 3 qui illustre comment l'estimation du spectre parcimonieux $\gamma$ permet de déterminer quelles sont les incidences des trajets reçus parmi l'ensemble des incidences potentielles.

Dit autrement : si la $q^{ème}$ composante de $\gamma$, i.e., composante $_\gamma(q)$, est déterminée, à l'issue du traitement de goniométrie parcimonieuse, comme non nulle, alors l'incidence $\Theta_q$, correspondant à la $q^{ième}$ colonne de $\mathbf{B}$, $\mathbf{b}(\Theta_q)$, est déterminée comme incidence d'un trajet reçu.

On est toutefois en présence d'un système d'équations ayant plus d'inconnues que d'équations. Pour résoudre ce système d'équations, il est alors nécessaire d'exploiter la parcimonie du vecteur $\gamma$. Pour cela, on ajoute au critère classique des moindres carrés une régularisation ou pénalité $\Phi(\lambda,\gamma)$ qui a pour objectif de favoriser la parcimonie de la solution devant contenir beaucoup de composantes nulles. Le critère à minimiser suivant le vecteur $\mathbf{x}$ a la forme suivante :

$$J_\Phi(\lambda,\mathbf{x}) = \frac{1}{2}\|\mathbf{y}-\mathbf{Bx}\|^2 + \Phi(\lambda,\mathbf{x}) \quad \text{(équation 17)}$$

Le poids relatifs des deux termes est réglé par un paramètre de régularisation $\lambda$ afin de garantir la relation $J_\Phi(\lambda,\mathbf{x}) > J_\Phi(\lambda,\gamma)$ pour tous vecteurs $\mathbf{x}$. Selon les résultats exposés dans « Goniométrie parcimonieuse de sources radio-électriques : modèles, algorithmes et mises en oeuvre robustes », Alice Delmer, thèse de doctorat, Université Paris-Saclay, Décembre 2021, ce poids peut être fixé a priori à partir de la limite de résolution du réseau de capteurs virtuels de réponse $\mathbf{b}(\Theta)$. La pénalité $\Phi(\lambda,\mathbf{x})$ a pour expression :

$$\Phi(\lambda,\mathbf{x}) = \sum_{q=1}^{Q} \varphi(\lambda,\mathbf{x}(q)) \text{ avec } \begin{cases} \varphi(\lambda,0) = 0 \\ \varphi(\lambda,x \neq 0) > 0 \end{cases} \quad \text{(équation 18)}$$

Les pénalités CELO et la pénalité $l_0$ (la pénalité $l_0$ étant définie comme la norme $l_0$ multipliée par $\lambda$) utilisées dans la thèse indiquée ci-dessus ont pour. point commun de vérifier $\varphi(\lambda,|x| > \varepsilon) = \lambda$. Dans le cas de $l_0$, la valeur de $\varepsilon$ tend vers 0 alors que, dans le cas de CELO, la fonction est plus large au voisinage de 0. D'autres pénalités possédant les mêmes propriétés ont été proposées dans la littérature.

L'algorithme d'estimation du vecteur y est itératif avec une initialisation avec le vecteur $\mathbf{x}^0$. La relation de récurrence entre deux étapes de l'algorithme est la suivante :

$$\mathbf{x}^{(i)} = prox_{\phi,\lambda\beta}\left(\mathbf{x}^{(i-1)} - \beta\mathbf{B}^H\left(\mathbf{y}-\mathbf{Bx}^{(i-1)}\right)\right) \text{ avec } \beta < 1/\|\mathbf{B}^H\mathbf{B}\| \quad \text{(équation 19)}$$

où $prox_{\phi,\lambda\beta}(.)$ est le proximal de la pénalité.

Dans le cas de $l_0$ et CELO, l'opérateur proximal vérifie :

$$prox_{\phi,\lambda\beta}(\mathbf{x}) = \begin{cases} x_g \text{ si } |x_g| \geq \sqrt{\lambda\beta} \\ 0 \text{ sinon} \end{cases}$$

cas         de         $l_0$:                                                        cas         de         CELO         :

$$prox_{\phi,\lambda\beta}\left(\mathbf{x}\right) = \begin{cases} 0 \text{ si } x_g = 0 \\ \dfrac{x_g}{|x_g|} \min\left(|x_g|, \dfrac{\left(|x_g| - \sqrt{2\lambda}\beta\right)_+}{1-\beta}\right) \text{ sinon} \end{cases}$$

avec (.)+=max(0,.).

Les étapes d'estimation du vecteur parcimonieux y sont résumées ci-dessous :

Etape **A.0** : Initialisation par le vecteur x$^0$ et $i$=0

Etape **A.1** : Calcul de $\mathbf{u} = \mathbf{x}^{(i-1)} - \beta\mathbf{B}^H(\mathbf{y}^{(i-1)} - \mathbf{Bx})$ (correspondant à une descente de gradient sur les moindres carrés)

Etape **A.2** : Mise à jour du vecteur avec le proximal : $\mathbf{x}^{(i)} = prox_{\phi,\lambda\beta}(\mathbf{u})$

Etape **A.3** : Si $\|\mathbf{y} - \mathbf{Bx}^{(i)}\| > \varepsilon$ retour à l'étape A.1 avec $i = i + 1$. Sinon, le vecteur parcimonieux γ est estimé égal à $\mathbf{x}^{(i)}$.

La valeur de $\varepsilon$ correspond à la précision d'estimation voulue. Elle peut être reliée à un niveau de bruit moyen s'il est connu. D'autres critères d'arrêts sont aussi possibles, comme par exemple un nombre maximum d'itérations ou la décroissance du critère entre deux itérations.

La pénalité CELO permet d'initialiser avec $\mathbf{x}^0$=0 contrairement à $l_0$ dans le cas général à cause de la présence de minima locaux. Les étapes d'estimation du vecteur parcimonieux γ peuvent être réalisées avec d'autres pénalités de la littérature comme MCP. Il est également envisageable d'utiliser des schémas plus complexes basés sur ces étapes simples : pénalité ou proximal variant dans le temps, paramètres dépendant des itérations, moyennage du vecteur sur plusieurs itérations...

**Processus de goniométrie parcimonieuse en présence de trajets corrélés**

En considérant maintenant que des trajets provenant d'un même émetteur 4 sont corrélés entre eux, l'approche proposée par l'invention est d'utiliser le modèle provenant des équations (12)-(14) exploitant la modélisation en gisement et élévation des multi trajets des signaux ionosphériques HF.

Dans un mode de réalisation de l'invention illustré en figure 4, un procédé 100 utilisant cette approche est mis en oeuvre par le bloc de traitement 50 ; ce procédé 100 comprend ainsi les étapes **C.0 à C.3** détaillées ci-après.

Dans une étape **C.0,** le bloc de traitement calcule $\mathbf{R}_x$ en fonction des signaux $\mathbf{x}(t)$ obtenus en sortie des N antennes et en déduit **y** à l'aide de la formule suivante :

$$\mathbf{y} = vec\left(\mathbf{R}_x\right) - \sigma^2 vec\left(\mathbf{I}_N\right).$$

Puis, dans une étape **C.1,** estimation du vecteur $\tilde{\gamma}$ par un processus de traitement parcimonieux tel qu'exposé aux étapes **A.0** à **A.3** (en y remplaçant la matrice **B** par la matrice **C** définie par l'équation (13) et en y remplaçant γ par $\tilde{\gamma}$).

Etape **C.2 :** de $\tilde{\gamma}$, identification des vecteurs avec des composantes non nulles (ou autrement dit, de norme non nulle), parmi les sous-vecteurs $\tilde{\gamma}_1, ..., \tilde{\gamma}_Q$ de $\tilde{\gamma}$ ainsi estimé (rappel : $\tilde{\gamma}_q$ est un vecteur de non nul seulement quand l'indice q correspond à un gisement des trajets d'un émetteur d'indice m dont proviennent des signaux reçus par le réseau de capteurs; dans ce cas q est noté $q_m$ ) et déduction des gisements des émetteurs incidents, ces gisements étant ceux associés aux seuls vecteurs $\tilde{\gamma}_q$ non nuls, i.e. pour q = $q_m$ (le nombre de vecteurs ayant des composantes non nulles fournit en outre la valeur de M, le nombre d'émetteurs à l'origine des signaux reçus).

Etape **C.3** : pour chaque gisement déduit de l'étape C.2 (et donc pour chaque émetteur m), m = 1 à M, identifié à l'étape C.2, étant donné que $\tilde{\gamma}_{qm} = vec(\mathbf{R}_m)$ : les composantes non nulles de type $\mathbf{R}_m(q_p, q_p) = y_{pp}{}^m$ de $\mathbf{R}_m$ sont ensuite identifiées : chacune de ces composantes non nulles est associée à une élévation d'indice $q_p$ et celle-ci est sélectionnée comme correspondant à l'élévation $\Delta_{mp}$ d'un trajet du $m^{ième}$ émetteur associé au gisement déduit.

L'estimation obtenue par les étapes **C.0** à **C.3** prend en compte à la fois la corrélation entre les trajets et la particularité des trajets HF. L'estimation est beaucoup plus précise que l'estimation obtenue par les étapes **A.0** à **A.3** avec le dictionnaire **B** où la corrélation des trajets augmente sensiblement le niveau du bruit. La prise en compte de la corrélation entre les trajets sans prise en compte de la spécificité des trajets HF impliquerait d'étendre le dictionnaire **B** par un dictionnaire $\Delta\mathbf{B}$ qui contient tous les termes croisés $\mathbf{a}(\Theta_{mp}) \otimes \mathbf{a}(\Theta_{nl})$ et dont la taille serait prohibitive.

Ces directions d'arrivée $\{\hat{\Theta}_{mp}\}$ estimées sont ensuite exploitées, par exemple pour localiser les émetteurs 4, ce qui est utilisé par le bloc de traitement 50 ou un autre dispositif électronique, dans le contrôle du spectre, la gestion des télécommunications, le suivi des porteurs d'émetteur (recherche de victimes enfouies après des catastrophes naturelles, protection d'espèces animales ...).

Le procédé peut être mis en oeuvre par l'exécution d'instructions logicielles sur un processeur comme décrit plus haut à titre d'exemple. Alternativement, il peut être mis en oeuvre par un hardware dédié, typiquement un circuit intégré numérique, soit spécifique (ASIC) ou basé sur une logique programmable (par exemple FPGA/Field Programmable Gate Array).

## Revendications

1. Procédé de détermination de la direction d'arrivée des trajets de signaux ionosphériques Hautes Fréquences sur un réseau (2) de N capteurs (3), avec $N \geq 2$ et selon lequel ledit procédé est mis en oeuvre par un dispositif électronique (50) de détermination de la direction d'arrivée des trajets et est **caractérisé en ce qu'**il comprend les étapes suivantes :

   - i. estimation, par goniométrie parcimonieuse, du vecteur $\tilde{\gamma}$ vérifiant l'équation :

$$vec(\boldsymbol{R}_x) - \sigma^2 vec(\boldsymbol{I}_N) = \boldsymbol{C}\tilde{\boldsymbol{\gamma}}$$

   où $\boldsymbol{I}_N$ est la matrice identité de taille NxN, $\sigma^2$ est le niveau du bruit et $\boldsymbol{R_x}$ est la matrice de covariance vectorisée du signal x(t) considéré en sortie du réseau de capteurs, avec, si $x_n(t)$ est le signal en sortie du $n^{ième}$ capteur :

$$\mathbf{x}(t) = \begin{bmatrix} x_1(t) \\ \vdots \\ x_N(t) \end{bmatrix};$$

   où $\mathbf{C} = \begin{bmatrix} \mathbf{U}(\theta_1) & \cdots & \mathbf{U}(\theta_Q) \end{bmatrix}$ avec $\begin{cases} \mathbf{U}(\theta) = \mathbf{A}^*(\theta) \otimes \mathbf{A}(\theta) \\ \mathbf{A}(\theta) = \begin{bmatrix} \mathbf{a}(\theta, \Delta_1) & \cdots & \mathbf{a}(\theta, \Delta_{Q'}) \end{bmatrix} \end{cases}$

   où le vecteur $\mathbf{a}(\theta, \Delta)$ de dimension $N$x1 est la réponse, connue, du réseau de capteurs à un signal reçu de direction d'arrivée $(\theta, \Delta)$, et
   Q est le nombre de gisements potentiels considérés $\theta_q$ pour $1 \leq q \leq Q$ et Q' est le nombre d'élévations potentielles par gisement, $\Delta_{q'}$, pour $1 \leq q' \leq Q'$ dans l'espace discrétisé d'incidence du réseau de capteurs selon une grille 2D de gisements $\theta_q$ et d'élévations $\Delta_{q'}$, pour $1 \leq q' \leq Q'$ avec $0 \leq \theta_q < 360°$ et $0 \leq \Delta_q' < 90°$, où

$$\tilde{\boldsymbol{\gamma}} = \begin{bmatrix} \tilde{\boldsymbol{\gamma}}_1 \\ \vdots \\ \tilde{\boldsymbol{\gamma}}_Q \end{bmatrix}$$

   - ii. identification des composantes non nulles, parmi les composantes $\tilde{\gamma}_1, ..., \tilde{\gamma}_Q$ dudit $\tilde{\gamma}$ estimé, et déduction, en fonction de l'indice $q_m$ de chacune desdites composantes $\tilde{\gamma}_q$ non nulles, du gisement de trajets de signaux depuis un émetteur respectif m ;
   - iii. pour chaque gisement déduit, étant donné que $\tilde{\gamma}_{q_m} = vec(\boldsymbol{R}_m)$, les composantes non nulles de type $\boldsymbol{R}_m(q_p, q_p) = \gamma_{pp}{}^m$ de $\boldsymbol{R}_m$ sont ensuite déterminées : l'élévation d'indice $q_p$ associée à chacune de ces composantes non nulle , est sélectionnée comme égale à une élévation $\Delta_{mp}$ d'un trajet du $m^{ième}$ émetteur.

2. Procédé de détermination de la direction d'arrivée des trajets de signaux sur un réseau (2) de N capteurs (3) selon la revendication 1, selon lequel l'estimation de la direction d'arrivée comprend l'estimation d'un angle d'élévation et d'un angle de gisement.

3. Procédé de détermination de la direction d'arrivée des trajets de signaux sur un réseau (2) de N capteurs (3) selon l'une quelconque des revendications précédentes, comprenant au moins une des dispositions suivantes :

- le nombre de trajets est supérieur au nombre N de capteurs ;
- des trajets sont corrélés temporellement entre eux.

4. Programme d'ordinateur, destiné à être stocké dans la mémoire d'un bloc électronique de traitement (50) et comprenant en outre un microcalculateur, ledit programme d'ordinateur comprenant des instructions qui, lorsqu'elles sont exécutées sur le microcalculateur, mettent en oeuvre les étapes i, ii, iii et iv d'un procédé de détermination de la direction d'arrivée des trajets de signaux sur un réseau de N capteurs selon l'une des revendications précédentes.

5. Dispositif (50) de détermination de la direction d'arrivée des trajets de signaux ionosphériques Hautes Fréquences sur un réseau de N capteurs, avec $N \geq 2$, ledit dispositif électronique de détermination de la direction d'arrivée des trajets étant adapté pour estimer par goniométrie parcimonieuse, le vecteur $\tilde{\gamma}$ vérifiant l'équation :

$$vec(\boldsymbol{R}_x) - \sigma^2 vec(\boldsymbol{I}_N) = \boldsymbol{C}\tilde{\boldsymbol{\gamma}}$$

où $I_N$ est la matrice identité de taille NxN, $\sigma^2$ est le niveau du bruit et $\mathbf{R_x}$ est la matrice de covariance vectorisée du signal x(t) considéré en sortie du réseau de capteurs, avec, si $x_n(t)$ est le signal en sortie du $n^{ième}$ capteur :

$$\mathbf{x}(t) = \begin{bmatrix} x_1(t) \\ \vdots \\ x_N(t) \end{bmatrix};$$

$$\text{où } \mathbf{C} = \begin{bmatrix} \mathbf{U}(\theta_1) & \cdots & \mathbf{U}(\theta_Q) \end{bmatrix} \text{ avec } \begin{cases} \mathbf{U}(\theta) = \mathbf{A}^*(\theta) \otimes \mathbf{A}(\theta) \\ \mathbf{A}(\theta) = \begin{bmatrix} \mathbf{a}(\theta,\Delta_1) & \cdots & \mathbf{a}(\theta,\Delta_{Q'}) \end{bmatrix} \end{cases}$$

où le vecteur $a(\theta, \Delta)$ de dimension $N$x1 est la réponse, connue, du réseau de capteurs à un signal reçu de direction d'arrivée $(\theta, \Delta)$, et

Q est le nombre de gisements potentiels considérés $\theta_q$ pour $1 \leq q \leq Q$ et Q' est le nombre d'élévations potentielles par gisement, $\Delta_{q'}$, pour $1 \leq q' \leq Q'$ dans l'espace discrétisé d'incidence du réseau de capteurs selon une grille 2D de gisements $\theta_q$ et d'élévations $\Delta_{q'}$, pour $1 \leq q' \leq Q'$ avec $0 \leq \theta_q < 360°$ et $0 \leq \Delta_{q'} < 90°$,
où

$$\tilde{\boldsymbol{\gamma}} = \begin{bmatrix} \tilde{\boldsymbol{\gamma}}_1 \\ \vdots \\ \tilde{\boldsymbol{\gamma}}_Q \end{bmatrix} \quad ;$$

ledit dispositif (50) étant en outre adapté pour identifier les composantes non nulles, parmi les composantes $\tilde{\gamma}_1, ..., \tilde{\gamma}_Q$ dudit $\tilde{\gamma}$ estimé, et pour déduire, en fonction de l'indice $q_m$ de chacune desdites composantes $\tilde{\gamma}_q$ non nulles, le gisement de trajets de signaux depuis un émetteur respectif m ;
ledit dispositif étant en outre adapté, pour chaque gisement déduit, étant donné que $\tilde{\gamma}_{q_m} = vec(\mathbf{R}_m)$, pour déterminer les composantes non nulles de type $\mathbf{R}_m(q_p, q_p) = \gamma_{pp}{}^m$ de $\mathbf{R}_m$ et sélectionner l'élévation d'indice $q_p$ associée à chacune de ces composantes non nulle, comme égale à une élévation $\Delta_{mp}$ d'un trajet du $m^{ième}$ émetteur.

6. Dispositif (50) de détermination de la direction d'arrivée des trajets selon la revendication 5, dans lequel l'estimation de la direction d'arrivée comprend l'estimation d'un angle d'élévation et d'un angle de gisement.

7. Dispositif (50) de détermination de la direction d'arrivée des trajets selon la revendication 5 ou 6, où l'une au moins des deux dispositions suivantes est vérifiée :

- le nombre de trajets est supérieur au nombre N de capteurs ;
- des trajets sont corrélés temporellement entre eux.

[Fig. 1]

[Fig. 2]

[Fig. 3]

Table de Calibration **B** avec

$$\begin{cases} \mathbf{b}(\Theta) = \mathbf{a}^\star(\Theta) \otimes \mathbf{a}(\Theta) \\ \Theta = (\theta, \Delta) \\ \mathbf{b}_{mp} = \mathbf{b}(\theta_m, \Delta_{mp}) \end{cases}$$

[Fig. 4]

100

C.0

Obtention $x(t)$ et calcul de $\mathbf{y} = vec(\mathbf{R}_x) - \sigma^2 vec(\mathbf{I}_N)$

C.1

Estimation, par goniométrie parcimonieuse, du vecteur $\tilde{\gamma}$ vérifiant |

$$\mathbf{y} = vec(\mathbf{R}_x) - \sigma^2 vec(\mathbf{I}_N) = \mathbf{C}\tilde{\gamma}$$

C.2

Déduction des gisements $\theta_m$ à partir des $\tilde{\gamma}q_m$

C.3

Déduction des élévations $\Delta_{mp}$

Europäisches
Patentamt

European
Patent Office

Office européen
des brevets

# RAPPORT DE RECHERCHE EUROPEENNE

Numéro de la demande

EP 24 20 0579

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | Alice Delmer: "Goniométrie parcimonieuse de sources radioélectriques : modèles, algorithmes et mises en oeuvre robustes", , 6 décembre 2021 (2021-12-06), XP093159276, Extrait de l'Internet: URL:https://theses.hal.science/tel-0351873 1v1/preview/104209_DELMER_2021_diffusion.p df#page=2 * figures 1.1, 1.2, 3.1-3.4 * * chapitres: 1 Introduction; 2 État de l'art des méthodes parcimonieuses en goniométrie; 3 Modèles d'observation SMV parcimonieux; Conclusion et perspectives. * ----- | 1-7 | INV. G01S3/74 H04B7/22 |
| A | ZHAO CHUNLEI ET AL: "Dimension Reduction for Grid-Based 2D DOA Estimation with Arbitrary Planar Arrays", 2021 CIE INTERNATIONAL CONFERENCE ON RADAR (RADAR), IEEE, 15 décembre 2021 (2021-12-15), pages 2339-2343, XP034287382, DOI: 10.1109/RADAR53847.2021.10028051 * figure 1 * * sections: I. Introduction; II: Mathematical Formulation; III. The Modified CADRE. * ----- | 1-7 | |
| A | US 5 444 451 A (JOHNSON RICHARD L [US] ET AL) 22 août 1995 (1995-08-22) * figure 1 * * colonne 1, ligne 9 - colonne 4, ligne 44 * ----- | 1-7 | |

**DOMAINES TECHNIQUES RECHERCHES (IPC)**

G01S
H04B

-/--

Le présent rapport a été établi pour toutes les revendications

| Lieu de la recherche | Date d'achèvement de la recherche | Examinateur |
|---|---|---|
| Munich | 5 février 2025 | Tancredi, Urbano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 24 20 0579

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GULDOGAN M B ET AL: "A new technique for direction of arrival estimation for ionospheric multipath channels", ADVANCES IN SPACE RESEARCH, ELSEVIER, AMSTERDAM, NL, vol. 44, no. 6, 15 septembre 2009 (2009-09-15), pages 653-662, XP026437855, ISSN: 0273-1177 [extrait le 2009-05-08] * figures 1-2 * * sections: 1. Introduction; 2 The Cross Ambiguity Function based Direction Finding (CAF-DF) technique. * | 1-7 | |

- - - - -

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 5 février 2025 | Tancredi, Urbano |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**EP 4 528 307 A1**

## ANNEXE AU RAPPORT DE RECHERCHE EUROPEENNE
## RELATIF A LA DEMANDE DE BREVET EUROPEEN NO.

EP 24 20 0579

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-02-2025

| Document brevet cité au rapport de recherche | Date de publication | Membre(s) de la famille de brevet(s) | Date de publication |
|---|---|---|---|
| US 5444451 A | 22-08-1995 | AUCUN | |

Pour tout renseignement concernant cette annexe : voir Journal Officiel de l'Office européen des brevets, No.12/82

# EP 4 528 307 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Goniométrie parcimonieuse de sources radio-électriques : modèles, algorithmes et mises en oeuvre robustes. **ALICE DELMER**. thèse de doctorat. Université Paris-Saclay, December 2021